(19) Europäisches Patentamt
European Patent Office
Office européen des brevets

(11) Numéro de publication: **0 197 973**
**B1**

# (12) FASCICULE DE BREVET EUROPÉEN

(45) Date de publication du fascicule du brevet: **10.08.88**

(51) Int. Cl.⁴: **C 01 B 21/06**, C 01 B 21/072

(21) Numéro de dépôt: **85904825.8**

(22) Date de dépôt: **30.09.85**

(86) Numéro de dépôt international: **PCT/FR 85/00267**

(87) Numéro de publication internationale: **WO 86/02064 (10.04.86 Gazette 86/08)**

## (54) PROCEDE DE NITRURATION D'OXYDES REFRACTAIRES.

(30) Priorité: **02.10.84 FR 8415104**

(43) Date de publication de la demande: **22.10.86 Bulletin 86/43**

(45) Mention de la délivrance du brevet: **10.08.88 Bulletin 88/32**

(84) Etats contractants désignés: **AT BE CH DE FR GB IT LI LU NL SE**

(56) Documents cité:
**DE-C-282 748**
**GB-A-2 127 390**

**Chemical Abstracts, Vol. 7, No. 7, July 1963, Columbus, Ohio (US) A.M. Lejus et al.: "Preparation and properties of aluminum nitride", see column 7146, abstract 7146e**

(73) Titulaire: **Etablissement Public dit: CENTRE NATIONAL DE LA RECHERCHE SCIENTIFIQUE (CNRS), 15, Quai Anatole France, F-75007 Paris (FR)**

(72) Inventeur: **GUYADER, Jean, Le Monthelon, F-35690 Acigne (FR)**
Inventeur: **VERDIER, Patrick, La Perlais, F-35690 Acigne (FR)**
Inventeur: **LAURENT, Yves, Les Landes de Billé Thorigné- Fouillard, F-35510 Cesson Sevigne (FR)**

(74) Mandataire: **Ahner, Francis, CABINET REGIMBEAU 26, avenue Kléber, F-75116 Paris (FR)**

**EP 0 197 973 B1**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

LIBER, STOCKHOLM 1988

## Description

La présente invention concerne un procédé de nitruration d'oxydes réfractaires, et en particulier la préparation de nitrure d'aluminium, selon un procédé original conduisant à un nitrure d'aluminium particulièrement pur et réactif.

La préparation de céramiques de type nitrure ou oxynitrure ou des verres oxyazotés se fait généralement à partir de réactifs à l'état solide. L'introduction d'azote dans ces phases nécessite l'utilisation d'un nitrure ou d'un oxynitrure.

Dans le cas des céramiques connues sous le nom de "sialons", leur densification s'effectue par addition d'un oxyde MgO, $Ln_2O_3$ ou d'un oxyde analogue. Les sources d'azote nécessaires à la préparation de ces phases sont soit $Si_3N_4$ ou $Si_2N_2O$, soit le nitrure d'ajout, soit le nitrure d'aluminium. Le nitrure de silicium est peu réactif et nécessite donc des températures de réaction très élevées. L'utilisation du nitrure d'ajout est souvent délicate (grande hygroscopicité de $Mg_3N_2$, $Ca_3N_2$, etc., difficulté de préparation et hygroscopicité de LnN, $Li_3N$, etc) et même parfois impossible (le nitrure de sodium par exemple est inconnu). L'oxynitrure de silicium $Si_2N_2O$ peut être utilisé dans certains cas (FR-A-2 526 001). Si l'on veut obtenir des phases exemptes de silicium : par exemple les oxynitrures $Ln_2AlO_3N$ ou les mixtes $Al_2O_3$-AlN, il est nécessaire de disposer de nitrure d'aluminium pur et réactif.

On dispose habituellement de nitrure d'aluminium préparé selon la méthode classique correspondant à la réaction suivante :

$$Al_2O_3 + 3C + N_2 \rightarrow 2AlN + 3CO$$

Cette réaction est conduite à des températures comprises entre 1600 et 1800°C. Le produit obtenu n'est pas pur comme le prouvent les observations suivantes :

- sa couleur est grise. Cette coloration est due à la présence de carbone ou de carbure d'aluminium.
- la mesure de la masse spécifique expérimentale (3,28 g/cm$^3$) donne une valeur supérieure à la valeur calculée (3,26 g/cm$^3$).
- le dosage de l'azote est déficitaire, la mesure du pourcentage d'azote expérimental (31,8 % N) donne une valeur inférieure à la valeur calculée (34,2 % N).

Récemment Huseby (Journal of the American Ceramic Society- 66, p, 217,1983) a mis au point une nouvelle méthode d'obtention de nitrure d'aluminium. Elle nécessite la préparation préliminaire du fluorure double d'aluminium et d'ammonium qui est ensuite décomposé en $AlF_3$. L'action de l'ammoniac sur $AlF_3$ entre 800 et 1000°C conduit à AlN. L'inconvénient majeur de cette synthèse est la formation de quantités importantes de HF au cours de la réaction.

Enfin, dans Chem. Abs. Vol. 7, n° 7, 1963, colonne 7146e, il a déjà été proposé de préparer du nitrure d'aluminium par réaction d'ammoniac à 1000°C sur de l'alumine finement divisée, obtenue par décomposition à 650°C de l'acétate d'aluminium. Une telle réaction ne peut être réalisée à cette température qu'en faisant appel à un précurseur particulier de l'alumine, à savoir l'acétate d'aluminium qu'il est nécessaire d'hydrolyser. Il est clair qu'un tel procédé complexe et onéreux ne peut pas être mis en oeuvre industriellement. Au surplus, il conduit à un nitrure d'aluminium amorphe qui ne peut pas être manipulé à l'air.

Le procédé selon l'invention écarte ces inconvénients en proposant une méthode simple de préparation de nitrure d'aluminium pur et réactif, facile à mettre en oeuvre.

La présente invention concerne un procédé de nitruration d'oxydes réfractaires, en particulier d'alumine, caractérisé en ce que l'on fait réagir de l'ammoniac sur ledit oxyde réfractaire en poudre à une température d'au moins environ 1200°C. La nitruration directe de l'oxyde réfractaire utilise, en particulier l'alumine, en poudre par l'ammoniac à cette température (soit environ 400 à 500°C au-dessous de la température de préparation usuelle du nitrure d'aluminium) permet d'obtenir un nitrure beaucoup plus réactif. L'ammoniac qui pénètre dans le four à une température inférieure à sa température de décomposition, à une température inférieure à environ 500°C, vient se dissocier au contact de la poudre d'oxyde réfractaire porté à une température d'au moins environ 1200°C, ce qui explique sa grande réactivité. Il est donc nécessaire de travailler dans des conditions telles que l'ammoniac se décompose au contact de l'oxyde réfractaire, et non pas trop prématurément lors de son entrée dans le four.

L'oxyde réfractaire utilisé, en particulier l'alumine, de granulométrie moyenne de 1 µm environ, est porte dans le four de réaction à une température supérieure à environ 1200°C. Le flux d'ammoniac, à une température inférieure à environ 500°C est introduit dans le four et réagit avec l'oxyde réfractaire pour donner le nitrure correspondant, à savoir le nitrure d'aluminium dans le cas de l'alumine.

Dans un mode particulier de mise en oeuvre de l'invention, on a utilisé de façon satisfaisante de l'alumine commerciale VNTRON® de granulométrie 1 µm à 99,99 %. On obtient ainsi un nitrure d'aluminium de granulométrie moyenne 0,2 µm et de surface spécifique 6,8 cm$^2$/g. La fin de la réaction est contrôlée par variation de masse et analyse radiocristallographique. Le nitrure obtenu se présente sous la forme d'une poudre blanche, légèrement hygroscopique. La pureté du nitrure obtenu est vérifiée par analyse de l'azote et par mesure de la masse spécifique (P). Les résultats très significatifs, sont présentés dans le tableau suivant :

| | Valeurs expérimentales | Valeurs calculées |
|---|---|---|
| p (g/cm3) | 3,18 | 3,26 |
| % N | 33,8 | 34,2 |

Plusieurs expériences ont été conduites afin de prouver la meilleure réactivité du nitrure d'aluminium préparé selon le procédé de l'invention comparé au nitrure d'aluminium préparé selon le procédé classique.

a) Oxydation comparée des deux nitrures

La figure 1 représente l'oxydation d'une même quantité de produit par chauffage sous oxygène pur. On remarque que le seuil de réaction est inférieur d'environ 100°C et que la cinétique d'oxydation est beaucoup plus rapide pour le nitrure d'aluminium selon l'invention (courbe 1) que pour le nitrure préparé selon le procédé classique (courbe 11). Ainsi à 100°C, la réaction est terminée dans le cas du nitrure obtenu selon l'invention alors que seulement 20 % environ du nitrure selon le procédé classique a réagi.

b) Etude de la zone vitreuse dans le système Na-Si-Al-O-N

La figure 2 représente l'étendue du domaine vitreux obtenu dans les deux cas :
- trait plein zone avec AlN selon le procédé classique
- trait pointillé zone avec AlN obtenu, selon l'invention.

L'étendue du second domaine vitreux est d'environ 4 fois supérieure à celle du premier.

On rappellera brièvement que l'introduction d'azote dans les verres améliore de façon significative les propriétés mécaniques et physiques de ces matériaux : dureté, modules élastiques, résistances à l'irradiation, etc.

La présente invention se rapporte donc également à l'utilisation de nitrure d'aluminium obtenu selon le procédé décrit, à la préparation de verres oxyazotés. Avec le nitrure d'aluminium obtenu selon l'invention, il a été possible de préparer des verres avec des compositions molaires pour lesquelles jusqu'alors on n'avait jamais réussi à obtenir de phases vitreuses (jusqu'à 25 % molaire de nitrure d'aluminium).

Le procédé de nitruration peut parfaitement s'appliquer à des oxydes réfractaires, autres que l'alumine. En effet, le procédé de l'invention s'applique également à la nitruration par exemple de silicates et d'aluminosilicates.

A titre d'exemple de nitruration de silicates, on mentionnera la réaction, à 1300°C, de l'ammoniac sur $Li_2SiO_3$ qui conduit au produit azoté de formule LiSiON :

$Li_2SiO_3 + NH_3$ 1300°C $\rightarrow$ LiSiON

Il convient de relever que LiSiON est utilisable dans la fabrication de verres spéciaux. A une température légèrement supérieure a 1300°C, et avantageusement sous une pression réduite, LiSiON se dismute selon le schéma :

3LiSiON dismutation $\rightarrow Li_2SiO_3 + LiSi_2N_3$

$LiSi_2N_3$ est un produit dôté de remarquables propriétés réfractaires.

La présente invention s'applique également à la nitruration d'alumino-silicates.

A titre d'exemple on mentionnera la préparation de β'-sialons à partir de $Al_2SiO_2O_7$ selon le schéma réactionnel suivant :

$Al_2Si_2O_7 + NH_3$ 13000°C $\rightarrow$ β'-sialon

Les β'-sialons sont des solutions solides dont la composition moyenne est $SiAlO_2N$.

Ces mêmes β'-sialons peuvent être obtenus à partir de kaolin naturel qui a pour formule $Al_2Si_2O_5(OH)_4$ et qui par déshydration conduisent précisément à l'alumino-silicate précité selon la réaction :

$Al_2Si_2O_5(OH)_4$ déshydration $\rightarrow Al_2Si_2O_7 + 2H_2O$

Bien entendu, les opérations de déshydratation et de nitruration sont avantageusement mises en oeuvre de façon simultanée au sein du même four.

Ce procédé de préparation des β'-sialons présente un intérêt considérable par rapport au procédé antérieurement connu qui impliquait une réaction de $Si_3N_4$ sur $Al_2O_3$ à une température de l'ordre de 2000°C.

**Revendications**

1. Procédé de nitruration d'oxydes réfractaires, caractérisé en ce qu'il consiste à faire réagir de l'ammoniac sur ledit oxyde réfractaire en poudre, dans un four où l'oxyde réfractaire pulvérulent est porté à une température d'au moins 1200°C et dans lequel le flux d'ammoniac pénètre à une température inférieure à environ 500°C.

2. Procédé selon la revendication 1, caractérisé en ce que la granulométrie moyenne de l'oxyde réfractaire utilisé est d'environ 1 micromètre.

3. Procédé selon l'une des revendications 1 et 2, caractérisé en ce que ledit oxyde réfractaire est choisi parmi l'alumine, les silicates et les alumino-silicates.

4. Procédé selon l'une des revendications 1 à 3, caractérisé en ce que l'on prépare du nitrure d'aluminium par réaction d'ammoniac sur de l'alumine.

5. Application du nitrure d'aluminium obtenu par la mise en oeuvre du procédé selon la revendication 4, à la préparation des verres oxyazotés.

**Patentansprüche**

1. Verfahren zur Nitridbildung hitzebeständiger Oxide, dadurch gekennzeichnet, daß man Ammoniak auf das hitzebeständige Oxid in Pulverform einwirken läßt, in einem Ofen, in dem das pulverförmige hitzebeständige Oxid auf eine Temperatur von mindestens 1200°C gebracht wird, und in den der Ammoniakstrom bei einer Temperatur unter etwa 500°C eintritt.

2. Verfahren nach Anpruch 1, dadurch gekenzeichnet, daß die mittlere Granulometrie des verwendeten hitzebeständigen Oxids etwa 1 Mikrometer ist.

3. Verfahren nach einem der Ansprüche 1 und 2, dadurch gekennzeichnet, daß das hitzebeständige Oxid aus Aluminiumoxid, den Silikaten und den Alumino-silikaten ausgewählt wird.

4. Verfahren nach einem der Ansprüche 1 bis 3, dadurch gekennzeichnet, daß man Aluminiumnitrid durch Reaktion von Ammoniak mit Aluminiumoxid herstellt.

5. Verwendung des durch Einsatz des Verfahrens nach Anspruch 4 erhaltenen Aluminiumnitrides zur Herstellung von Oxy-Stickstoff-Gläsern.

**Claims**

1. A method for nitriding refractory oxides, in which ammonia is reacted with the said refractory oxide in powder form, in a furnace in which the powdered refractory oxide is heated to a temperature of at least 1200°C and in which the ammonia stream enters at a temperature below approximately 500°C.

2. The method as claimed in claim 1, wherein the mean particle size of the refractory oxide employed is approximately 1 micrometer.

3. The method as claimed in either of claims 1 and 2, wherein the said refractory oxide is chosen from alumina, silicates and aluminosilicates.

4. The method as claimed in one of claims 1 to 3, wherein aluminum nitride is prepared by the reaction of ammonia with alumina.

5. The application of aluminum nitride obtained by the use of the method as claimed in claim 4, for the preparation of glasses containing oxygen and nitrogen.

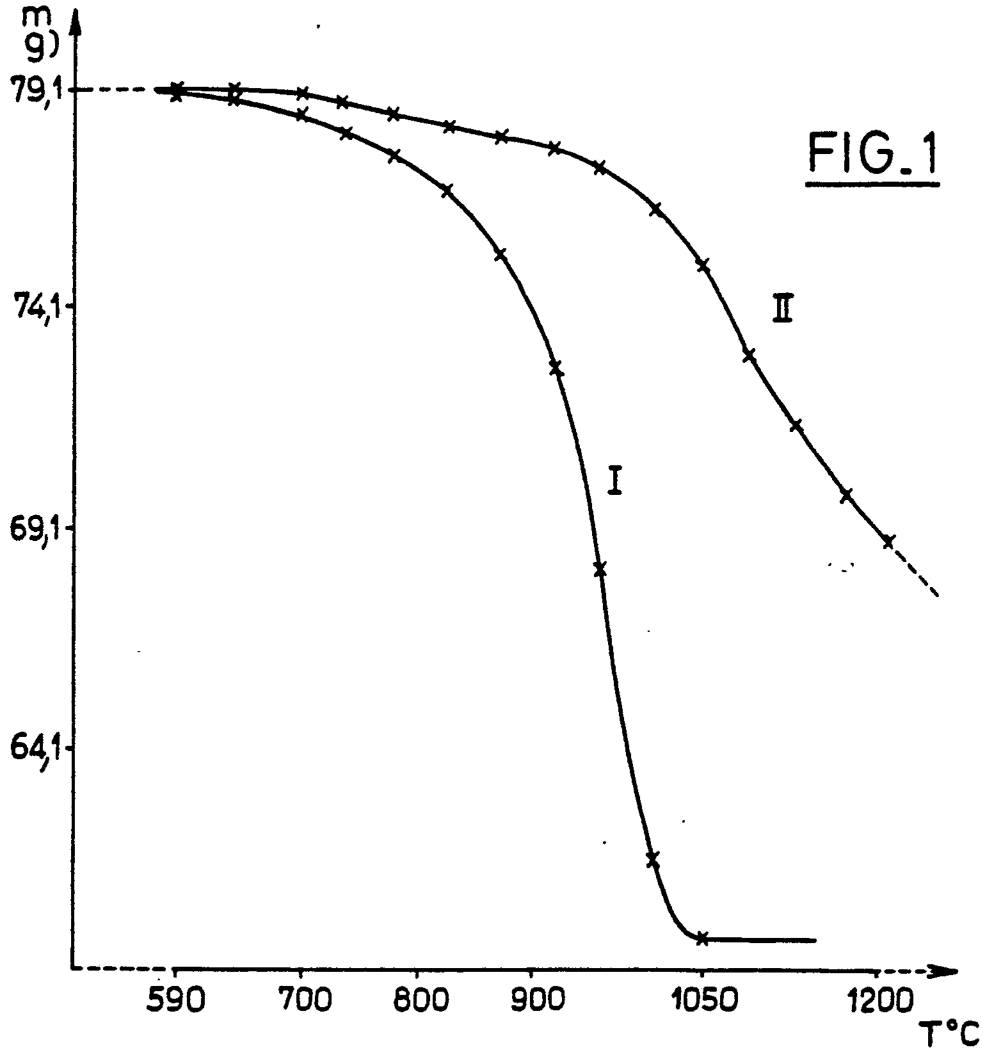
m
g)
79,1
74,1
69,1
64,1
I
II
590
700
800
900
1050
1200
T°C

FIG_1

FIG_2

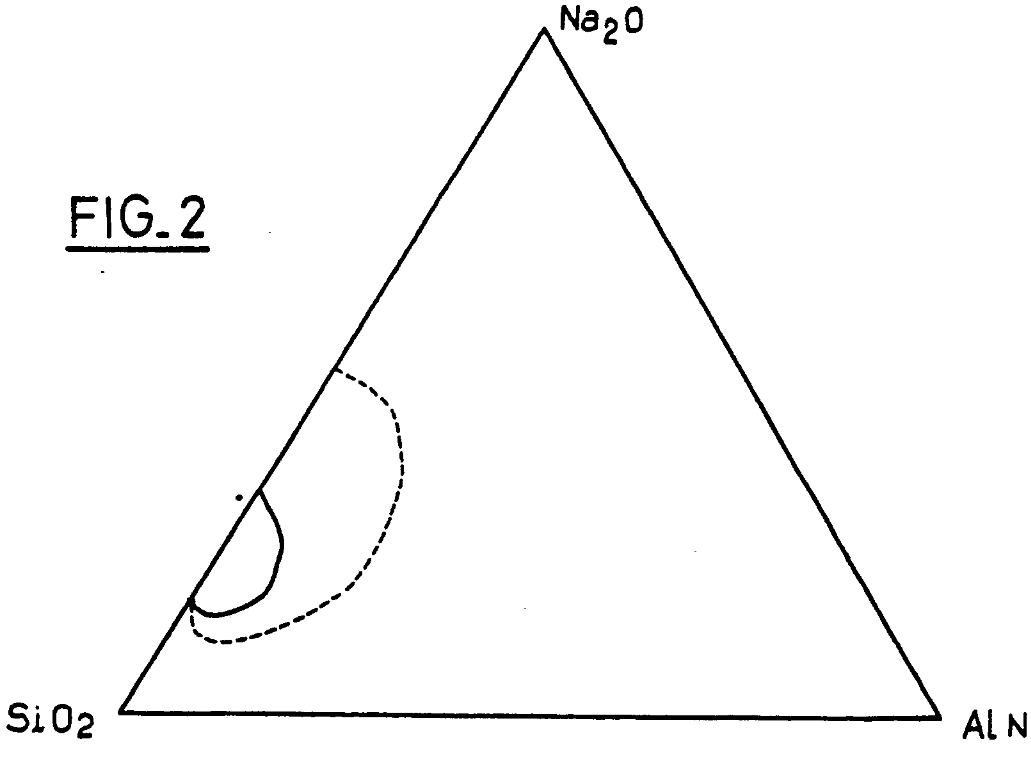
Na2O
SiO2
AlN